# EUROPEAN PATENT APPLICATION

(11) **EP 1 518 743 A1**
(43) Date of publication of application: **30.03.2005**
(21) Application number: 04021753.1
(22) Date of filing: 14.09.2004
(51) Int. Cl.: B60N 2/02, B60N 2/42, B60N 2/427

(54) **Seat device for vehicle**

(30) Priority: 25.09.2003 JP 2003333287; 03.09.2004 JP 2004256830
(71) Applicant: Aisin Seiki Kabushiki Kaisha, Kariya-shi, Aichi-ken 448-8650 (JP)
(72) Inventor: Yamada, Yukifumi, Kariya-shi Aichi-ken 448-8650 (JP); Ito, Sadao, Kariya-shi Aichi-ken 448-8650 (JP); Nihonmatsu, Hideo, Kariya Aichi, 448-8605 (JP)
(74) Representative: Pautex Schneider, Nicole

(57) **Abstract**

A seat device for a vehicle includes a seat body (6) having a base portion (6b) adapted to be mounted on the vehicle and a moving portion (6a) movable relative to the base portion and an actuator (7) configured to operate at a first operational speed and at a second operational speed faster than the first operational speed. The actuator (7) moves the moving portion (6a) relative to the base portion (6b). The seat device for the vehicle further includes a control device (8) for controlling the actuator (7) to operate at the second operational speed upon detection of approach of an obstacle (S) relative to the vehicle.

## Description

### FIELD OF THE INVENTION

The present invention relates to a seat device for a vehicle. More particularly, the present invention pertains to a seat device including an actuator for changing a state of a seat body.

### BACKGROUND

A known seat device for a vehicle is described in JP2000-225877A2. The known seat device for the vehicle described in JP2000-225877A2 detects the approach of an obstacle, or the like, relative to the vehicle and oscillates an oscillator provided at a seat body (i.e., a seat cushion and a seatback) based on a detected signal which is indicates a detection of the approach of the obstacle. As a result, an operator of the vehicle is reported the approach of the obstacle relative to the vehicle.

Another known seat device for vehicle is described in U.S. Patent No. 4396220 B1. The known seat device for vehicle described in U.S. Patent No. 4396220 B1 detects the lateral collision at the own vehicle and moves the seat body to be away from the vehicle lateral surface based on the detected signal which is indicates a detection of the lateral collision. As a result, an occupants of the vehicle evacuates from the lateral surface of the vehicle to improve the safety for the occupants.

With the construction of the known seat device for vehicle described in JP2000-225877A2, the approach of the obstacles, or the like, is reported to the operator, but the safety of the occupants is not increased by changing the state of the seat body.

A lead time from the detection of the existence of the obstacles, or the like, to the collision is generally estimated to be several tenths of a second although it is largely different depending on the vehicle speed. Thus, with the construction of the known seat device for vehicle described in U.S. Patent No. 4396220 B1, it is required to predetermine the operational speed of the actuator faster in order to complete the movement of the seat body to the safe position within the lead time. Notwithstanding, for example, in case the seat body is moved using an actuator for adjusting the position of the seat body, the faster operational speed bustles the positional adjustment of the seat body by the occupants, which deteriorates the luxury and dignified operation.

A need thus exists for a seat device for vehicle which swiftly changes a state of a seat body upon approach of an obstacle without losing comfortable operational feeling for adjusting the position of the seat body.

### SUMMARY OF THE INVENTION

In light of the foregoing, the present invention provides a seat device for a vehicle, which includes a seat body having a base portion adapted to be mounted on the vehicle and a moving portion movable relative to the base portion and an actuator configured to operate at a first operational speed and at a second operational speed faster than the first operational speed. The actuator moves the moving portion relative to the base portion. The seat device for the vehicle further includes a control means for controlling the actuator to operate at the second operational speed upon detection of approach of an obstacle relative to the vehicle.

According to the present invention, the moving portion of the seat body moves relative to the base portion of the seat body by changing the operational speed of the actuator to operate at the second operational speed by the control means upon the detection of the approach of the obstacle relative to the vehicle, thus to swiftly change a state of the seat body to be a predetermined safe state. Operating the actuator at the first operational speed at the normal usage for adjusting the position of the seat body, the operational feeling for the adjustment is not deteriorated.

### BRIEF DESCRIPTION OF THE DRAWINGS

The foregoing and additional features and characteristics of the present invention will become more apparent from the following detailed description considered with reference to the accompanying drawings, wherein:

Fig. 1 is a block view showing an embodiment of the present invention.

Fig. 2 is a perspective view showing a seat body.

Fig. 3 is a graph showing a relationship between torque and rotational speed of a direct current motor.

Fig. 4 is a flowchart showing operation of a controller.

### DETAILED DESCRIPTION

One embodiment of the present invention will be explained with reference to illustrations of drawing figures as follows.

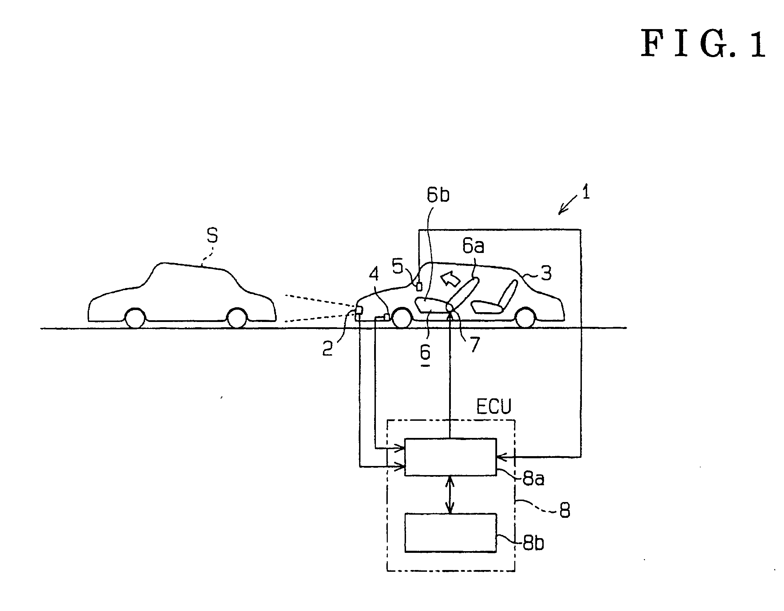

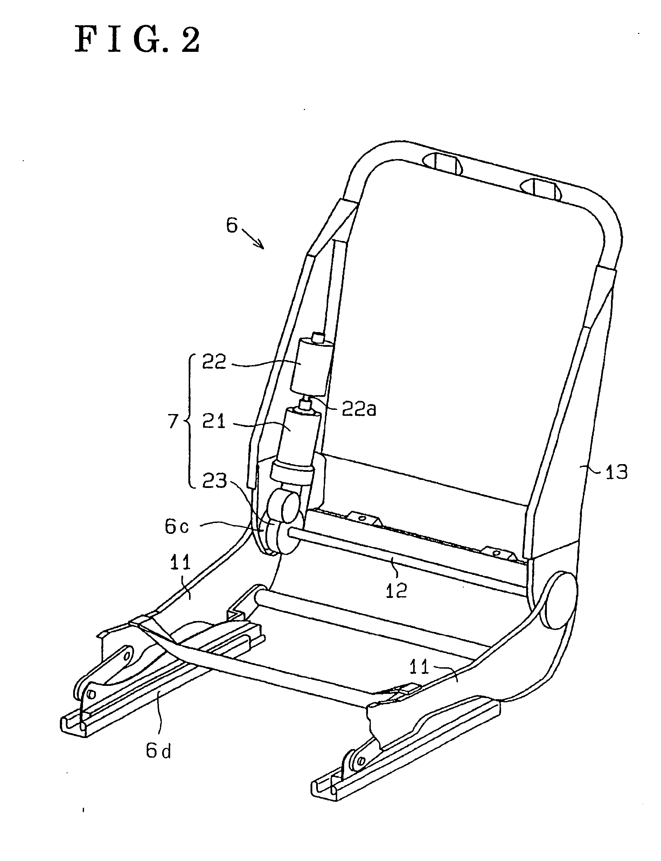

As shown in Fig. 1, a seat device 1 for a vehicle includes a seat body 6. The seat body 6 includes a seat cushion 6b (i.e., serving as a base portion) and a seatback 6a (i.e., serving as a moving portion) rotatably supported by a reclining mechanism 6c (shown in Fig. 2) relative to the seat cushion 6b. The angle of gradient (i.e., reclining angle) of the seatback 6a relative to the seat cushion 6b is applied as a state of the seat body. The seat body 6 includes the seatback 6a, the seat cushion 6b, the reclining mechanism 6c serving as a mechanical construction, and a slide mechanism 6d (shown in Fig 2) serving as the mechanical construction for movably supporting the seat cushion 6a and the seatback 6b in the longitudinal direction of the vehicle relative to a floor. A position of the seat cushion 6a and the seatback 6b relative to the floor in the longitudinal direction may be applied as the state of the seat body 6. In this case, the seat cushion 6a and the seatback 6b serve as the moving portion of the seat body for the seat device for the vehicle and the slide mechanism 6d serves as the base portion of the seat body of the seat device for vehicle.

The seat device 1 for the vehicle further includes a laser radar sensor 2(i.e., serving as a detection means), a vehicle speed sensor 4 for detecting a traveling speed (i.e. vehicle speed) of a vehicle 3, a driving position adjusting switch 5(i.e., serving as an operation means), and an actuator 7 and a controller 8 8 (i.e., serving as a control means) for adjusting the angle of gradient (i.e., reclining angle) of the seatback 6a relative to the seat cushion 6b.

The laser radar sensor 2 is provided at a front portion of the vehicle 3 for irradiating the laser forward of the vehicle 3 to detect the time, or the like, until the laser returns after reflecting at an obstacle S (e.g., vehicle traveling forward of the vehicle 3). Thereafter, the laser radar sensor 2 calculates the existence of the obstacles at the forward based on the detected time, or the like, the relative distance and the relative speed with the obstacle S to output the information to the controller 8.

The vehicle speed sensor 4 is, for example, provided at a rear portion of an output shaft of a transmission. The vehicle speed sensor detects the vehicle speed based on the rotational speed of the transmission and outputs the information to the controller 8.

The driving position adjusting switch 5 operated by the user (e.g., driver) of the seat body 6 outputs ON signal showing the operation to the controller 8 at the operation. The ON signal is always outputted to the controller 8 during the operation of the driving position adjusting switch 5 by the user, and the output is stopped when the operation is canceled.

The actuator 7 is connected to the reclining mechanism of the seat body 6 for adjusting the angle of gradient of the seatback 6a of the seat body 6. The actuator 7 changes response speed between a lower speed side (i.e., serving as a first operational speed) and a higher speed side (i.e., serving as a second operational speed) to selectively operate at predetermined response speed in accordance with the driving signal from the controller 8.

The controller 8 corresponding to a digital computer includes a CPU (central processing unit) 8a, and a memory 8b memorizing various programs and data, or the like. The controller 8 outputs the driving signal relative to the actuator 7 in order to operate the actuator 7 with the response speed at the lower speed side based on the ON signal from the driving position adjusting switch 5. The controller 8 detects the approach of the obstacles to the vehicle 3 based on the vehicle speed information by the vehicle speed sensor 4 and the relative distance and the relative speed to the obstacle S by the laser radar sensor 2. When the approach of the obstacle S to the vehicle 3 is detected, the driving signal is outputted to the actuator 7 in order to operate the actuator 7 with the response speed at the higher speed side to determine the angle of gradient of the seatback 6a of the seat body 6 to be a predetermined safe angle serving as a predetermined safe state which is pre-memorized in the memory 8b. The safe angle of the seatback 6a is determined within the angle of gradient of the seatback 6a at which the impact applied to the occupant (i.e., dummy) obtained by the collision experiment, or the like, under the predetermined condition is less than a predetermined value.

The seat body 6 and the actuator 7 according to the embodiment of the present invention will be explained as follows. As shown in Fig. 2, the seat body 6 includes a pair of lower arms 11, 11 movably (i.e., slidabley) supported by the slide mechanism 6d in the vehicle longitudinal direction relative to the floor of the vehicle 3 and a seatback frame 13 rotatably connected to the lower arm 11 via the reclining mechanism 6c configured to be rotatable about an axial line of a connecting rod 12 bridging the lower arms 11, 11. The lower arms 11, 11 and the seatback frame 13 serve as frameworks of the seat cushion 6b and the seatback 6a respectively.

The actuator 7 accommodated along the seatback frame 13 is provided at a first side (i.e., left side of Fig. 2) of the connecting rod 12. The actuator 7 includes a first direct current motor 21, a second direct current motor 22, and a decelerator 23. The first direct current motor 21 and the second direct current motor 22, for example, have the identical specifications. A rotational shaft 22a of the second direct current motor 22 is connected to a rotational shaft of the first direct current motor 21 in series penetrating a housing of the first direct current motor 21. Thus, the rotational speed of the rotational shaft of the first direct current motor 21 is switched from the lower speed side to the higher speed side by switching the actuation from the independent actuation by the first direct current motor 21 to the actuation by the first direct current motor 21 together with the second direct current motor 22.

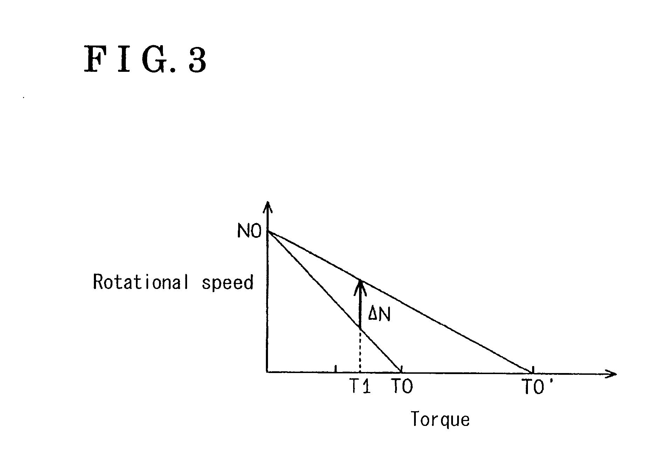

As shown in Fig. 3 showing the relationship between the torque and the rotational speed of the direct current motors 21, 22, linear functions based on the torque T0 and the rotational speed N0 with the independent actuation of first direct current motor 21 is established. It is presumed that the second direct current motor 22 does not affect as the load when the first direct current motor 21 is actuated independently. On the other hand, when it is switched to the actuation by the both first and second direct current motors 21, 22, linear functions based on the torque T0' showing the value approximately twice of the torque T0 and the rotational speed N0 is established. Provided that the torque (i.e, load) required for reclining the seatback frame 13 assumes constant at torque T1, the rotational speed assumes faster by ΔN based on the differential between the linear functions upon the independent actuation of the first direct current motor 21 and the linear functions upon the actuation of the both first and second direct current motors 21, 22. Accordingly, the rotational speed of the rotational shaft of the first direct current motor 21 is switched from the lower speed side to the higher speed side by switching the actuation from the independent actuation by the first direct current motor 21 to the actuation by the first and the second direct current motors 21, 22.

The decelerator 23 is connected to the rotational shaft of the first direct current motor 21. The decelerator 23 decelerates the rotational speed of the rotational shaft of the first direct current motor 21 by a predetermined deceleration ratio to rotate the seatback frame 13 about the axial line of the connecting rod 12 by the reclining mechanism 6c. Thus, the angle of gradient of the seatback frame 13 is adjusted and determined. By switching the rotational speed of the rotational shaft of the first direct current motor 21 from the lower speed side to the higher speed side, the response speed of the actuator 7 according to the reclining movement of the seatback frame 13 via the decelerator 23 is switched from the lower speed side to the higher speed side.

The operation of the seat device for the vehicle according to the embodiment of the present invention will be explained as follows. The user operates the driving position adjusting switch 5 for adjusting the angle of gradient of the seatback 6a (i.e., seatback frame 13) at the normal usage. In this case, the controller 8 actuates the actuator 7 based on the ON signal from the driving position adjusting switch 5 to move the seatback frame 13. With the foregoing operation, the controller 8 supplies the power only to the first direct current motor 21 from a battery having a predetermined electric voltage for independently actuating the first direct current motor 21 for driving the actuator 7 with the response speed at the lower speed side. At the independent actuation of the first direct current motor 21, the power supply terminals of the second direct current motor 22 may be short circuited by the controller 8 so that the second direct current motor 22 does not affect as the load. Otherwise, the second direct current motor 22 may be affected as the load and the response speed of the actuator 7 may be lowered by the load of the second direct current motor 22.

On the other hand, when the controller 8 detects the approach of the obstacle S by the relative distance and the relative speed to the obstacle S detected by the laser radar sensor 2 and by the vehicle speed detected by the vehicle speed sensor 4, the controller 8 actuates the actuator 7 to move the seatback 6a (i.e., seat frame 13) until reaching the predetermined safe angle. At the operation after detecting the approach of the obstacle S to the vehicle, the controller 8 supplies the power to the first and the second direct current motors 21, 22 to switch to the actuation with the both first and second direct current motors 21, 22 in order to actuate the actuator 7 with the response speed at the higher speed side. With the foregoing operation, the controller 8 monitors the angle of the gradient of the seatback 6a by the electric current amount (i.e., the power supply time by the battery) supplied to the first direct current motor (and the second direct current motor), and the whether the angle of the gradient reaches the safe angle is judged by the electric current amount.

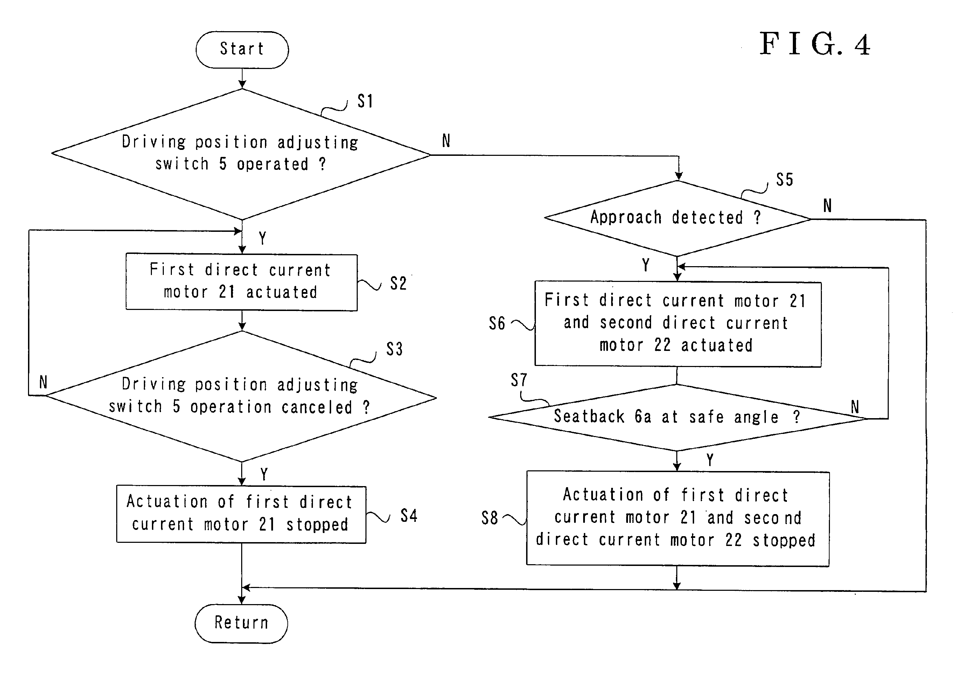

The operation of the controller 8 will be explained with reference to Fig. 4. Further, the CPU 8a of the controller 8 always monitors the existence of ON signal outputted from the driving position adjusting switch 5 as long as the electric power is supplied to the controller 8. Further, the CPU 8a is always inputted with the relative distance information and the relative speed information relative to the obstacle S detected by the laser radar sensor 2 and the vehicle speed information detected by the vehicle speed sensor 4 to detect the approach of the obstacle S to the vehicle 3 based on the information.

The CPU 8a of the controller 8 judges whether the user operates the driving position adjusting switch 5 based on the existence of the ON signal from the driving position adjusting switch 5. In case the ON signal is inputted to the controller 8 by the operation of the driving position adjusting switch 5, the CPU 8a judges the operation of the driving position adjusting switch 5 to output the driving signal for actuating the first direct current motor 21 of the actuator 7 at Step S2. Thus, the actuator 7 operates with the response speed at the lower speed side. At Step S3, whether the operation of the driving position adjusting switch 5 is canceled is judged based on the existence of the ON signal. The transaction returns to Step S2 in case the ON signal inputted into the controller 8 to keep actuating the first direct current motor 21. In case the input of the ON signal is stopped, the CPU 8a judges that the operation of the driving position adjusting switch 5 is canceled to stop the actuation of the first direct current motor 21 at Step S4.

At Step S1, the CPU 8a judges whether the CPU 8a detects the approach of the obstacle S relative to the vehicle 3 based on the vehicle speed information detected by the vehicle speed sensor 4, the relative distance and the relative speed information relative to the obstacle S detected by the laser radar sensor 2 at Step S5 when the ON signal is not inputted from the driving position adjusting switch 5 so that the user judges that driving position adjusting switch 5 is not operated. When the CPU 8a detects the approach of the obstacle S, the CPU 8a outputs the driving signal to actuate the first direct current motor 21 and the second direct current motor 22 at Step S6. Accordingly, the actuator 7 operates with the response speed at the higher speed side. At Step S7, the transaction returns to Step S6 until the angle of the gradient of the seatback 6a assumes the safe angle (i.e., the state of the seat body 6 assumes safe) to keep driving the first direct current motor 21 and the second direct current motor 22. When the seatback 6 assumes safe angle, the actuation of the first direct current motor 21 and the second direct current motor 22 stops at Step S8.

With the construction of the foregoing embodiment, the following effects can be obtained. With the construction of the embodiment of the present invention, the state of the seat body 6 (i.e., the angle of the gradient of the seatback 6a) can be swiftly determined to be the predetermined safe state (i.e., safe reclining angle) by changing the response speed of the actuator 7 to the higher speed side by the controller 8 when the approach of the obstacle S relative to the vehicle 3 is detected by the controller 8. At the normal usage for adjusting the state of the seat body 6, by operating the actuator 7 with the response speed of the actuator 7 changed to at the lower speed side, the luxury and dignified operation is not deteriorated to obtain the comfortable operational feeling.

With the construction of the embodiment of the present invention, the actuator 7 can be provided with the function to change the response speed with the simple construction that the rotational shaft of the first and the second direct motors 21, 22 are connected in series. The construction of the embodiment of the present invention may be varied as follows.

With the construction of the embodiment of the present invention, the specifications of the first direct current motor 21 and the second direct current motor 22 may be different from each other. Although the two direct current motors are connected in series as the driving member in the foregoing embodiment, the actuator may include more than three direct current motors arranged in series. In this case, more number of the direct current motor may be actuated in order to switch the response speed of the actuator to further higher speed.

Although the angle of the gradient of the seatback 6a is detected by the electric current amount (i.e., the power supply time by the batter) supplied to the first direct current motor 21 (the second direct current motor 22) according to the foregoing embodiment, the angle of the gradient of the seatback 6a may be detected by the rotational position sensor including Hall element, or the like. In case a mechanism for selectively restricting or guiding the angle of the gradient of the seatback 6a to the safe angle is provided, the power supply to the first direct current motor 21 and the second direct current motor 22 may be continued until the safe angle is determined.

Although the first and the second direct current motors 21, 22 are adopted as the driving member according to the foregoing embodiment, other driving members may be applied as long as the response speed of the actuator can be switched to the higher speed side by the cooperation of, for example, the simultaneously actuated plural members.

With the construction of the embodiment of the present invention, the number of the simultaneously actuated direct current motor is changed in order to change the response speed of the actuator 7. To the contrary, in case a power source member (e.g., electric current source or electric voltage source) capable of switching between the higher output side state and the lower output side state and the actuator includes a single driving member (e.g., direct current motor), the state of the power source member may be changed in order to change the response speed of the actuator. In case the approach of the obstacle S is detected, the power source member of the actuator is switched to the state of the higher output side.

For example, by performing the PWM (pulse width modulation) control of the supply time from the battery relative to the actuator, the state of the power source is switched between the higher output side state and the lower output side state to change the response speed of the actuator.

Further, in case the actuator includes a deceleration member (i.e., decelerator) configured to be switched to the plural gearshift stage, the gearshift stage of the deceleration member may be switched in order to change the response speed of the actuator. In case the approach of the obstacle S is detected, the deceleration member of the actuator is switched to the gearshift stage at the higher speed side.

With the foregoing embodiment, the embodiment of the present invention is applied to the mechanism for adjusting the angle of the gradient (i.e., the reclining angle) of the seatback 6a serving as the state of the seat body 6. To the contrary, for example, the construction of the embodiment of the present invention may be applied to mechanisms for adjusting a position of the seat body 6 relative to the floor in the vehicle longitudinal direction(i.e., the relative position relative to the dashboard of the vehicle), a position of the seat body 6 relative to the floor in the vehicle lateral direction (i.e., the relative position relative to the vehicle lateral surface), a height position relative to the floor of the seat cushion 6b (i.e., lower arm 11), a height and position of a headrest in the longitudinal direction, or the like.

The obstacle S according to the embodiment of the present invention, for example, may include the vehicle traveling forward of the vehicle, the parked vehicle, the vehicle reversed from the forward, or the like.

With the foregoing embodiment of the present invention, the approach of the vehicle 3 to the obstacle S (e.g., vehicles traveling ahead) located forward of the vehicle 3 is detected. To the contrary, another laser radar sensor may be provided on a rear portion of the vehicle 3 to detect the approach of the vehicle 3 relative to the obstacle (e.g., the vehicle traveling behind). Further, another laser radar sensor may be provided on the lateral position of the vehicle 3 to detect the approach of the vehicle 3 relative to the obstacle located sides of the vehicle 3. In this case, the approach may be detected by a millimeter-wave-radar, and an image, or the like.

Although the approach of the obstacle is detected by the controller 8 with the construction of the embodiment of the present invention, the approach of the obstacle S may be detected by another controller different from the controller 8 and the signal showing the approach of the obstacle S may be outputted to the controller 8 therefrom.

The principles, preferred embodiment and mode of operation of the present invention have been described in the foregoing specification. However, the invention which is intended to be protected is not to be construed as limited to the particular embodiment disclosed. Further, the embodiments described herein are to be regarded as illustrative rather than restrictive. Variations and changes may be made by others, and equivalents employed, without departing from the sprit of the present invention. Accordingly, it is expressly intended that all such variations, changes and equivalents which fall within the spirit and scope of the present invention as defined in the claims, be embraced thereby.

## Claims

1. A seat device for a vehicle comprising:
a seat body (6) includes a base portion (6b) adapted to be mounted on the vehicle and a moving portion (6a) movable relative to the base portion;
an actuator (7) for moving the moving portion relative to the base portion; and
a control means (8) for controlling the actuator to operate upon detection of approach of an obstacle relative to the vehicle;
**characterized in that**
the actuator is configured to operate at a first operational speed and at a second operational speed faster than the first operational speed; and
the control means controls the actuator to operate at the second operational speed upon the detection of the approach of the obstacle relative to the vehicle.

2. The seat device according to Claim 1, wherein the control means controls the actuator to operate at the second operational speed until a state of the seat body assumes a predetermined safe state.

3. The seat device according to Claim 1, further comprising:
an operation means (5) operated by an occupant of the vehicle; wherein
the control means controls the actuator to operate at the first operational speed based on a signal from the operation means.

4. The seat device according to Claim 1, further comprising:
a detection means (2) for detecting the approach of the obstacle relative to the vehicle, the detection means including a laser radar sensor.

5. The seat device according to Claim 1, wherein
the actuator includes a plurality of driving members;
the operational speed of the actuator is switched to the first operational speed and to the second operational speed in accordance with number of the simultaneously actuated driving members; and
the control means controls the actuator to operate the actuator at the second operational speed by simultaneously driving the plural driving members of the actuator upon the detection of the approach.

6. The seat device according to Claim 5, wherein
the plural driving members includes a first direct current motor and a second direct current motor;
rotational shafts of the first direct current motor and the second direct current motor are connected in series; and wherein
the control means controls the actuator to simultaneously drive the first and the second direct current motors until a state of the seat body assumes a predetermined safe state.

7. The seat device according to Claim 6, further comprising:
an operation means (5) operated by an occupant of the vehicle; wherein
the control means controls the actuator to independently drive the first direct current motor based on a signal from the operation means.

8. The seat device according to Claim 1, wherein
the seat body includes a seat cushion adapted to be supported on a floor of the vehicle and a seatback rotatably supported relative to the seat cushion;
the base portion includes the seat cushion and the moving portion includes the seatback; and
the control means controls the actuator to operate at the second operational speed until an angle of gradient of the seatback relative to the seat cushion assumes a predetermined safe angle.
